# NEUE EUROPÄISCHE PATENTSCHRIFT

(11) **EP 1 621 065 B2**
(45) Veröffentlichungstag und Bekanntmachung des Hinweises auf die Entscheidung über den Einspruch: **10.08.2011**
(45) Hinweis auf die Patenterteilung: 02.04.2008
(21) Anmeldenummer: 05016269.2
(22) Anmeldetag: 27.07.2005
(51) Int. Cl.: A01D 75/08, A01D 90/06, A01F 29/22

(54) **Landwirtschaftliche Erntemaschine**
Agricultural machine
Machine agricole

(30) Priorität: 30.07.2004 DE 102004037212
(43) Veröffentlichungstag der Anmeldung: 01.02.2006
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)
(74) Vertreter: Busse & Busse

(56) Entgegenhaltungen:
- EP-A- 0 204 967
- DE-A1- 3 419 955
- DE-B- 1 240 324
- DE-C2- 3 323 116
- DE-U- 1 911 783
- DE-U- 1 923 722
- DE-U1-202004 004 133
- US-A- 4 321 773
- US-A1- 2001 034 187

## Beschreibung

Die Erfindung bezieht sich auf eine landwirtschaftliche Erntemaschine zum Ernten von landwirtschaftlichem Halm- und Blattgut, wie beispielsweise Heu, Stroh oder angewelktes Grüngut nach dem Oberbegriff des Anspruchs 1. Derartige Erntemaschinen umfassen in der Regel eine, einer Aufnahmeeinrichtung nachgeordnete Förder- und Schneideinrichtung, bei der mit Hilfe eines Förder- und Schneidrotors oder dgl. Förderaggregat das landwirtschaftliche Halm- und Blattgut geschnitten und beispielsweise in der Ausführungsform eines Ladewagens einem Laderaum oder bei einer Ballenpresse einer Press- und Verdichtungskammer zugeführt wird.

Eine Erntemaschine dieser Gattung ist aus der EP 0 204 967 A1 bekannt. Diese als Ladewagen ausgeführte landwirtschaftliche Erntemaschine ist mit einer Schneideinrichtung ausgerüstet, welche quer zur Fahrt- und Arbeitsrichtung mit voneinander beabstandeten Schneidmessern versehen ist. Diese Schneidmesser sind schwenkbar an einem Schneidrahmen der Schneideinrichtung angeordnet und können dadurch zur Durchführung einer Schneidarbeit in den Förderkanal hineinbewegt werden. Soll keine Schneidarbeit verrichtet werden, so können die Schneidmesser auch in eine Stellung außerhalb des Förderkanals verbracht werden. Die hier verwendeten Schneidmesser haben eine etwa dreieckige oder parallelogrammähnliche Grundform, wobei eine Seite als Schneidkante ausgebildet ist. Diese während der Schneidarbeit dem Förder- und Schneidrotor zugewandte Schneidkante kann dazu geradlinig oder bogenförmig gestaltet sein. Damit die Schneidmesser nach bestimmten Zeitabschnitten geschliffen werden können, offenbart die EP 0 204 967 A1 eine Schleifeinrichtung, mit der jeweils nur ein einzelnes Schneidmesser der Schneideinrichtung dadurch geschliffen werden kann, dass eine motorisch angetriebene und über eine Führungsvorrichtung am Fahrzeugrahmen gehalterte Schleifeinrichtung von Hand an der Schneidkante der Schneidmesser entlang geführt wird. Diese Schleifarbeit verbunden mit der Zustellung der Schleifeinrichtung zum nächsten zuschleifenden Schneidmesser muss für jedes einzelne Schneidmesser der Schneideinrichtung durchgeführt werden.

Die DE 34 19 955 A1 offenbart eine Fördereinrichtung für einen Ladewagen, bei der umlaufend angetriebene Förderzinken in einem Förderkanal mit Schneidmessern zusammenwirken, um vom Boden aufgenommenes und auf die Ladefläche des Ladewagens zu förderndes Erntegut während des Fördervorganges zu schneiden. Zur Reduzierung der für Wartungsarbeiten aufzuwendenden Zeiten wurde hier vorgeschlagen, die mit einem Schneidmesser zusammenwirkenden Förderzinken an der dem Schneidmesser zugewandten Seite mit einem Schleifwerkzeug zu versehen, so dass das Schleifwerkzeug bei jedem Umlauf einmal an der Schneidkante der Schneidmesser entlang geführt wird und somit eine Schleifarbeit verrichtet, die im Förderkanal stattfindet.

Heutige, moderne Schneideinrichtungen in Ladewagen, Rundballenpressen, Rechteckballenpressen oder dgl. Erntemaschinen sind mit einer Vielzahl von Schneidmessern ausgestattet, damit die für einen hochwertigen Siliervorgang erforderliche kurze Schnittlänge des landwirtschaftlichen Halm- und Blattgutes erreichbar ist. Wenn dann diese große Anzahl an Schneidmessern noch mehrmals täglich geschliffen werden muss, so ergibt sich daraus ein nicht mehr vertretbarer Arbeitsaufwand für den Benutzer der landwirtschaftlichen Erntemaschine.

Aufgabe der vorliegenden Erfindung ist es daher, die Nachteile des Standes der Technik zu überwinden und eine landwirtschaftliche Erntemaschine zum Ernten von landwirtschaftlichem Halm- und Blattgut bereit zu stellen, bei der der Arbeitsaufwand zum Schärfen der Schneidmesser für den Benutzer auf ein Minimum reduziert ist.

Zur Lösung der gestellten Aufgabe zeichnet sich die landwirtschaftliche Erntemaschine der vorstehend genannten Art durch die im Anspruch 1 angegebenen Merkmale aus. Hinsichtlich der weiteren Ausgestaltung der Erfindung wird auf die Unteransprüche verwiesen.

Eine landwirtschaftliche Erntemaschine nach der Erfindung zeichnet sich durch eine Förder- und Schneideinrichtung aus, bei der der Arbeitsaufwand für das Schärfen der Schneidmesser auf ein Minimum reduziert ist, in dem der Förder- und Schneideinrichtung eine Schärfeinrichtung zugeordnet ist, mit der das gleichzeitige Schärfen einer aus zumindest zwei Schneidmessern gebildeten Messergruppe möglich ist. Vorzugsweise entspricht die Anzahl der gleichzeitig zu schärfenden Schneidmesser einem ganzzahligen Teiler der gesamten Anzahl der Schneidmesser der Förder- und Schneideinrichtung. In einer vorteilhaften Ausführungsform der Erfindung kann es sogar vorgesehen sein, alle Schneidmesser zumindest einer Schneidebene gleichzeitig zu schärfen. Durch diese Ausgestaltung einer Schärfeinrichtung entfallen langwierige Positionierungstätigkeiten, insbesondere dann, wenn die Anzahl der gleichzeitig zu schärfenden Schneidmesser etwa der halben oder der ganzen Anzahl der in der Förder- und Schneideinrichtungen enthaltenen Anzahl an Schneidmessern entspricht.

In einer vorteilhaften Ausgestaltung der Erfindung ist es vorgesehen, jedem Schneidmesser der Förder- und Schneideinrichtung einen Schärfkörper zu zuordnen. In einer einfachen Ausführungsform können die Schärfkörper dabei in einem dem Abstand der Schneidmesser entsprechenden Abstand auf einer drehbar gelagerten Antriebswelle angebracht sein. Eine erste Bauform der Schneidmesser weist eine etwa dreieckige oder parallelogrammähnliche Grundform auf, wobei eine Seite dieser Grundform als geradlinige oder auch bogenförmig ausgebildete Schneidkante gestaltet ist. In der Schneidstellung sind diese Schneidmesser so angeordnet, dass die Schneidkante sich an der einem als Förder- und Schneidrotor ausgeführten Förderaggregat zugewandten Seite befindet. Dadurch ist es bei dieser Messerbauform erforderlich, die an einem Schneidrahmen gehalterten Schneidmesser der ersten Bauform in eine Stellung zu verbringen, in der diese für einen Schärfvorgang zugänglich sind. Eine solche, zum Schärfen der Schneidmesser geeignete Stellung ist dann erreicht, wenn beispielsweise durch eine hydraulische Kolben-Zylinder-Anordnung oder dgl. Stellglied der Schneidrahmen mit den daran angebrachten Schneidmessern aus dem Förderkanal herausgeschwenkt werden, bis sich die Schneidkanten der Schneidmesser z. B. in einer etwa horizontalen Ebene befinden und somit von einer, einen rotierend angetriebenen Schärfkörper für jedes Schneidmesser enthaltenden Schärfeinrichtung angefahren werden können. Zum Antrieb der Schärfkörper können hydraulische oder elektrische Antriebsmittel bzw. Motoren vorgesehen sein. Zur Durchführung des Schärfvorganges ist bei dieser Bauform der Schneidmesser erforderlich, die rotierend angetriebenen Schärfkörper in einer hin und hergehenden Bewegung an den Schneidkanten entlang zu führen. Die dazu erforderliche Antriebseinrichtung kann als ein, eine Zug- oder Druckkraft ausübendes Stellglied ausgeführt sein. In einer einfachen Ausführungsform kann dies eine hydraulische Kolben-Zylinder-Anordnung oder ein elektrischer Linearantriebsmotor sein, wobei durch diese genannten Antriebselemente gleichzeitig auch die Verbringung der Schärfeinrichtung in eine Ruhestellung erfolgen kann. Insbesondere bei einer Schärfeinrichtung, bei der alle Schneidmesser zumindest einer Schneidebene gleichzeitig mit einem Schärfkörper der Schärfeinrichtung in Eingriff gebracht und somit alle Schneidmesser gleichzeitig geschärft werden können, entfallen gegenüber dem Stand der Technik umfangreiche Zustelltätigkeiten, die dadurch anfielen, dass die zur Verfügung stehende Schleifeinrichtung bei jedem einzelnen Schneidmesser zunächst auf dieses Schneidmesser auszurichten war, bevor die eigentliche Schleifarbeit beginnen konnte.

Als Schärfkörper der Schärfeinrichtung können erfindungsgemäß entweder materialabtragende Schleifscheiben oder als materialverdrängende, die Schneidkanten der Schneidmesser ausformende Werkzeuge vorgesehen sein.

Eine detaillierte Beschreibung des Gegenstandes der Erfindung erfolgt nun anhand eines Ausführungsbeispieles. In der Zeichnung stellt im einzelnen dar:
- Fig.1: eine teilweise abgebrochene Darstellung einer als Ladewagen ausgeführten landwirtschaftlichen Erntemaschine mit einer nach der Erfindung gestalteten Förder- und Schneideinrichtung mit einer Schärfeinrichtung in einer Außerbetriebsstellung;
- Fig.2: eine vergrößerte Darstellung der Förder- und Schneideinrichtung nach Fig. 1, bei der sich die Schärfeinrichtung jedoch in einer Schärfstellung befindet;
- Fig.3: eine Schnittdarstellung der Förder- und Schneideinrichtung gemäß Schnitt III - III in Fig. 2;

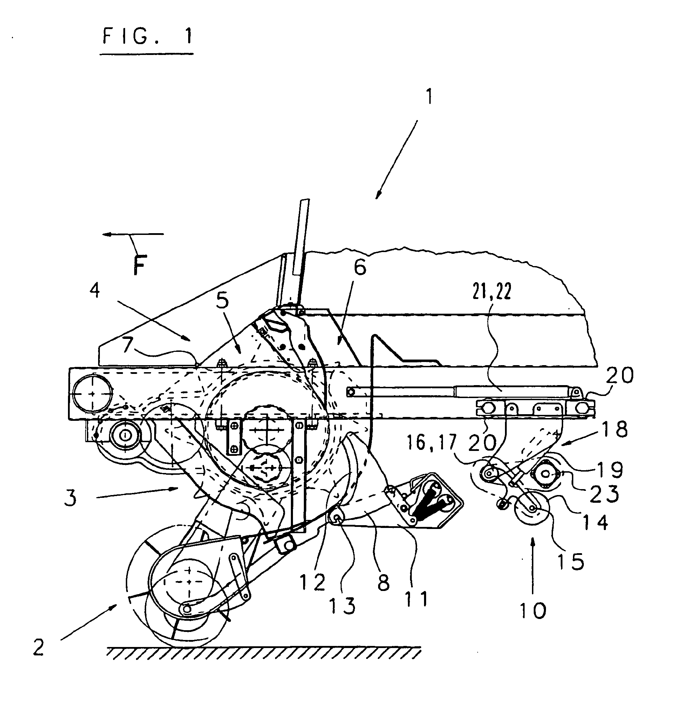

In Fig. 1 ist eine von mehreren möglichen Ausführungsformen einer landwirtschaftlichen Erntemaschine mit einer erfindungsgemäßen Gestaltung näher veranschaulicht. Die hier dargestellte und als Ladewagen 1 ausgebildete landwirtschaftliche Erntemaschine dient dem Ernten von landwirtschaftlichem Halm- und Blattgut, wie beispielsweise Heu, Stroh oder angewelktem Grüngut. Zur Aufnahme des landwirtschaftlichen Halm- und Blattgut weist der Ladewagen 1 eine Aufnahmeeinrichtung 2 auf, welche das aufgenommene Halm- und Blattgut zu einer Förder- und Schneideinrichtung 3 weiterfördert. Wie aus dem dargestellten Ausführungsbeispiel hervorgeht, umfasst die Förder- und Schneideinrichtung 3 als Förderaggregat 4 einen Förder- und Schneidrotor 5, der oberhalb von einem Förderkanal 6 angeordnet und mit Förderzinken 7 bestückt ist. Beim Schneiden des Halm- und Blattgutes wirken die von oben in den Förderkanal 6 eintauchenden Förderzinken 7 mit Schneidmessern 8,9 zusammen, welche quer zur Fahrtrichtung F in einem Abstand zueinander angeordnet sind. Die vorteilhaften Wirkungen der Erfindung lassen sich jedoch nicht nur auf Ladewagen anwenden. Ebenso ist es vorstellbar, die Erfindung auch an Rundballenpressen oder Rechteckballenpressen zu verwirklichen. Im Ausführungsbeispiel nach der Fig. 1 ist als Förderaggregat 4 eine Förder- und Schneidrotor 5 mit starren Förderzinken 7 ausgeführt. Auch hier sind andere Ausführungsformen eines Förderaggregates denkbar, beispielsweise ein Förder- und Schneidrotor mit gesteuerten Förderzinken oder einen umlaufenden Kettenförderer, dessen Förderzinken dann mit den Schneidmessern 8,9 zusammenwirken.

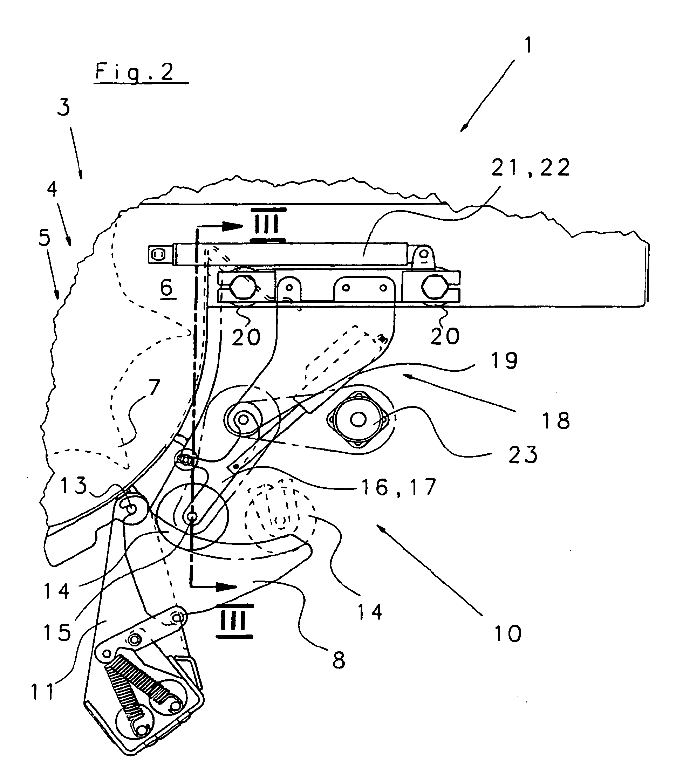

Wie weiterhin aus der Fig. 1 hervorgeht, ist der Förder- und Schneideinrichtung 3 erfindungsgemäß eine Schärfeinrichtung 10 zugeordnet, welche sich hier in einer die Förder- und Schneidarbeit nicht behindernde Außerbetriebsstellung befindet. Darunter versteht man eine Position, in der es auch noch möglich ist, die an einem Schneidrahmen 11 gehalterten Schneidmesser 8 aus der Schneidstellung (Fig.1) in eine Nichtschneid- bzw. Wartungsstellung (Fig.2) zu überführen. In dieser Position ist ein ungehinderter Zugang zu den in diesem Ausführungsbeispiel bogenförmigen Schneidkanten 12 der Schneidmesser 8 möglich, wobei die Überführung der am Schneidrahmen 11 gehalterten Schneidmesser 8 durch eine Schwenkbewegung des Schneidrahmens 11 um die horizontal und quer zu Fahrtrichtung F ausgerichtete Achse 13 durch die Wirkung eines beispielsweise als hydraulische Kolben-Zylinder-Anordnung ausgebildeten, jedoch nicht dargestellten Stellgliedes erfolgt.

In Fig.2, einer vergrößerten Darstellung der Förder- und Schneideinrichtung 3 ist die Schärfeinrichtung 10 in einer Schärfstellung abgebildet. Die Schneidmesser 8 befinden sich deshalb in der Nichtschneid- bzw. Wartungsstellung. Wie hier dargestellt, weist die Schärfeinrichtung 10 Schärfkörper 14 auf, die in der Schärfstellung mit den Schneidkanten 12 der Schneidmesser 8 in Eingriff bringbar sind. Die Schärfkörper 14 der Schärfeinrichtung 10 sind dazu auf einer drehbar gelagerten Antriebswelle 15 angebracht, wobei diese Antriebswelle 15 in um eine horizontale und quer zur Fahrtrichtung F ausgerichtete Achse der Schärfeinrichtung 10 schwenkbaren Laschen 16,17 aufgehängt ist. Beim Schärfvorgang der Schneidmesser 8 werden die Schärfkörper 14 zwischen einer vorderen Position (voll gezeichnet) und einer hinteren Position (strichliniert) entlang der Schneidkanten 12 hin und herbewegt. Hierzu ist eine Antriebseinrichtung 18 vorgesehen, die im dargestellten Ausführungsbeispiel als ein eine Zug- oder Druckkraft ausübendes Stellglied 19 ausgeführt ist. Zur Einleitung der hin und hergehenden Bewegung der Schärfkörper 14 während des Schärfvorganges der Schneidmesser 8 könnte in einer Weiterbildung der Erfindung auch eine als Kurbeltrieb ausgebildete Antriebseinrichtung benutzt werden. Das in Fig. 2 verwendete und als elektrisch angetriebener Linearantriebsmotor gestaltete Stellglied 19 erfüllt hier neben der Einleitung der hin und hergehenden Bewegung beim Schärfvorgang der Schneidmesser 8 noch eine weitere Funktion. Durch das vollständige Einfahren des Stellgliedes 19 werden die Schärfkörper 14 aus dem Wirkbereich während des Schärfvorganges herausgeschwenkt und können dadurch in dieser Position auch gesichert gehalten werden, wenn kein Schärfen der Schneidmesser 8 gewünscht wird.

Zur Überführung der Schärfeinrichtung 10 zwischen der Schärfstellung und der die Förder- und Schneidarbeit nicht behindernde Außerbetriebsstellung ist die Schärfeinrichtung 10 mit Laufrollen 20 versehen, welche beispielsweise in Zusammenwirkung mit Laufschienen des Fahrzeugrahmens eine in oder entgegen der Fahrtrichtung F gerichtete bewegliche Anordnung der Schärfeinrichtung 10 ermöglichen. Als Antrieb hierzu dienen hydraulische Kolben-ZylinderAnordnungen 21,22.

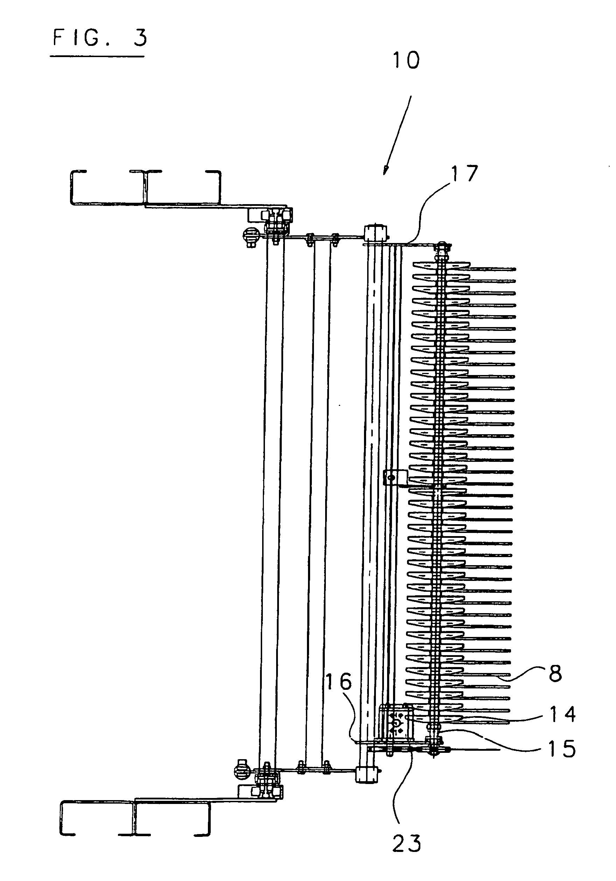

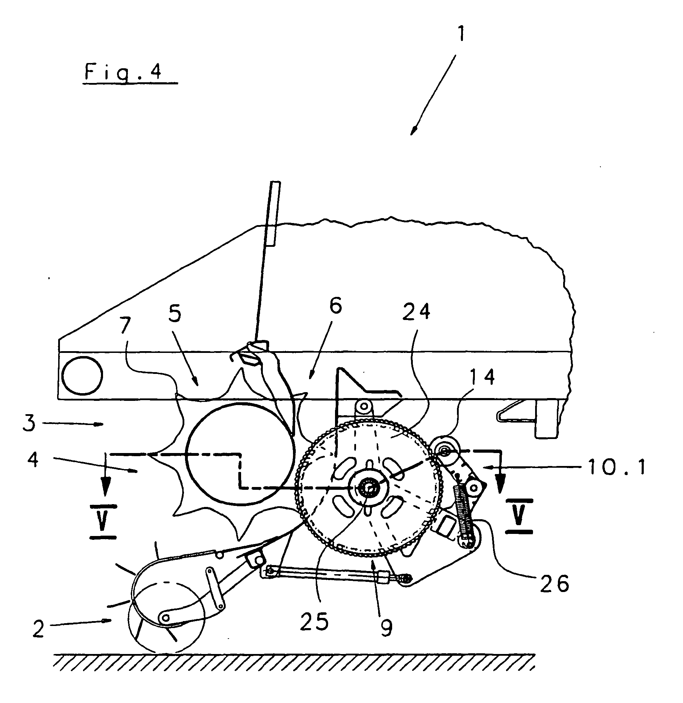

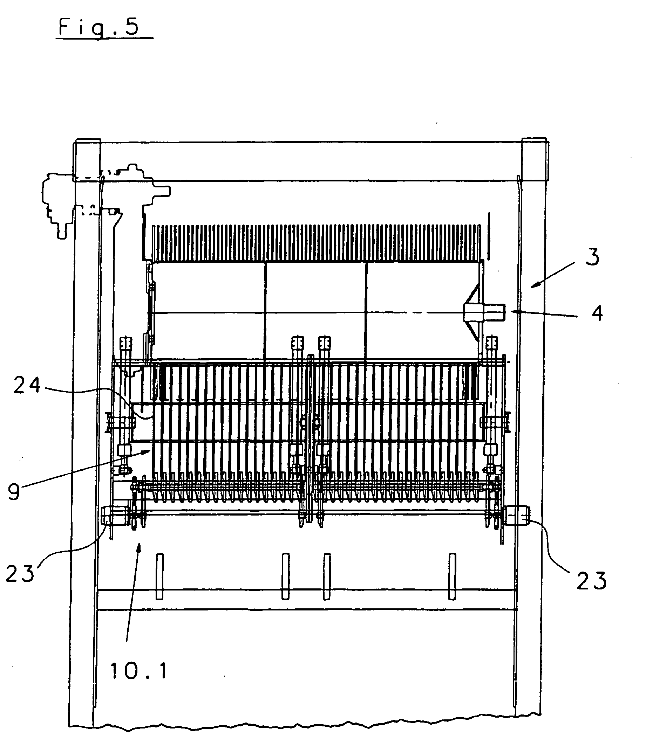

Fig.3 zeigt in einer Schnittdarstellung eine vorteilhafte Ausführungsform der Erfindung, bei der jedem Schneidmesser 8 der Förder- und Schneideinrichtung 3 ein Schärfkörper 14 der Schärfeinrichtung 10 zugeordnet ist. Dadurch entfallen jegliche quer zur Fahrtrichtung F gerichtete Zustelltätigkeiten der Schärfkörper 14, so dass dadurch der Bedienaufwand der erfindungsgemäßen Schärfeinrichtung 10 auf ein Minimum reduziert ist. Wie weiterhin aus Fig.3 ersichtlich ist, werden die Schärfkörper 14 während des Schleifvorganges rotierend angetrieben. Dafür kann ein elektrisch oder hydraulisch antreibbarer Motor 23 oder dgl. Antriebsmittel vorgesehen sein.

Als Schärfkörper 14 der Schärfeinrichtung 10,10.1 können erfindungsgemäß entweder materialabtragende Schleifscheiben oder als materialverdrängende, die Schneidkanten der Schneidmesser ausformende Werkzeuge vorgesehen sein.

## Patentansprüche

1. Landwirtschaftliche Erntemaschine zum Ernten von landwirtschaftlichem Halm- und Blattgut mit einer, einer Aufnahmeeinrichtung (2) zur Aufnahme von Halm- und Blattgutes nachgeordneten Förder- und Schneideinrichtung (3), welche einen Förderkanal (6) umfasst, in dem ein mit Förderzinken (7) bestücktes, umlaufend angetriebenes Förderaggregat (4) mit einer Anzahl von quer zur Fahrt- und Arbeitsrichtung voneinander beabstandet angeordneten Schneidmessern (8,9) zur Halmgutzerkleinerung zusammenwirkt, mit einer der Förder- und Schneideinrichtung (3) zugeordneten Schärfeinrichtung (10,10.1) zum Schärfen der Schneidmessern (8,9) in einem Bereich außerhalb des Förderkanals (6), mit der das gleichzeitige Schärfen einer aus zumindest zwei Schneidmessern (8,9) gebildeten Messergruppe erreichbar ist und die Schärfkörper (14) der Schärfeinrichtung (10,10.1) in einem, dem Abstand der Schneidmesser (8,9) entsprechenden Abstand auf einer drehbar gelagerten antreibaren Antriebswelle (15) gehaltert sind.

2. Landwirtschaftliche Erntemaschine nach Anspruch 1, **dadurch gekennzeichnet, dass** die Anzahl der in einer Messergruppe zusammengefassten Schneidmesser (8,9) einem ganzzahligen Teiler der gesamten Anzahl der Schneidmesser (8,9) der Förder- und Schneideinrichtung (3) entspricht.

3. Landwirtschaftliche Erntemaschine nach Anspruch 1, **dadurch gekennzeichnet, dass** die Anzahl der in einer Messergruppe zusammengefassten Schneidmesser (8,9) etwa der Hälfte der gesamten Anzahl der Schneidmesser (8,9) der Förder- und Schneideinrichtung (3) entspricht.

4. Landwirtschaftliche Erntemaschine nach Anspruch 1, **dadurch gekennzeichnet, dass** die zum Schärfen vorgesehene Messergruppe alle Schneidmesser (8,9) zumindest einer Schneidebene der Förder- und Schneideinrichtung (3) umfasst.

5. Landwirtschaftliche Erntemaschine nach einem der Ansprüche 1 bis 4, **dadurch gekennzeichnet, dass** die Schneidmesser (8) um eine Achse (13) schwenkbar der Schneid- und Fördereinrichtung (3) zugeordnet sind und zumindest eine, in der Schneidstellung einem als Schneid- und Förderrotor ausgebildeten Förderaggregat (4) zugewandte geradlinige oder bogenförmige Schneidkante (12) aufweist.

6. Landwirtschaftliche Erntemaschine nach einem der Ansprüche 1 bis 4, **dadurch gekennzeichnet, dass** die Schneidmesser (9) als rotierende Schneidscheiben ausgeführt sind.

7. Landwirtschaftliche Erntemaschine nach einem der Ansprüche 1 bis 4, **dadurch gekennzeichnet, dass** die Schneidmesser (9) als rotierend angetriebene Schneidscheiben (24) ausgebildet sind.

8. Landwirtschaftliche Erntemaschine nach einem der Ansprüche 1 bis 7, **dadurch gekennzeichnet, dass** die Schärfeinrichtung (10,10.1) aus Schärfkörpern (14) besteht, wobei jedem Schneidmesser (8,9) einer für den Schärfvorgang vorgesehenen Messergruppe je ein Schärfkörper (14) zugeordnet ist.

9. Landwirtschaftliche Erntemaschine nach Anspruch 5, **dadurch gekennzeichnet, dass** die die Schärfkörper (14) tragende Antriebswelle (15) aus einer, die Förder- und Schneidarbeit der Förder- und Schneideinrichtung (3) nicht behindernden Außerbetriebsstellung in eine, mit den Schneidmessern (8) zusammenwirkende Schärfstellung überführbar ist.

10. Landwirtschaftliche Erntemaschine nach Anspruch 9, **dadurch gekennzeichnet, dass** die Schärfeinrichtung (10) eine Antriebseinrichtung (18) umfasst, die in der Schärfstellung ein kontinuierliches Entlangführen der Schärfkörper (14) an den Schneidkanten (12) der Schneidmesser (8) bewirkt.

11. Landwirtschaftliche Erntemaschine nach Anspruch 10, **dadurch gekennzeichnet, dass** die Antriebseinrichtung (18) zum kontinuierlichen Entlangführen der Schärfkörper (14) an den Schneidkanten (12) der Schneidmesser (8) als ein, eine Zug- oder Druckkraft ausübendes Stellglied (19) ausgeführt ist.

12. Landwirtschaftliche Erntemaschine nach Anspruch 6 oder 7, **dadurch gekennzeichnet, dass** die Schärfkörper (14) der Schärfeinrichtung (10.1) während des Schärfvorganges mit den als Schneidscheiben (24) ausgebildeten Schneidmessern (9) in Eingriff bringbar sind.

13. Landwirtschaftliche Erntemaschine nach einem der Ansprüche 1 bis 12, **dadurch gekennzeichnet, dass** die Schärfkörper (14) der Schärfeinrichtung (10,10.1) als materialabtragende Schleifscheiben ausgeführt sind.

14. Landwirtschaftliche Erntemaschine nach einem der Ansprüche 1 bis 12, **dadurch gekennzeichnet, dass** die Schärfkörper (14) der Schärfeinrichtung (10,10.1) als materialverdrängende, die Schneidkante (12) der Schneidmesser (8,9) ausformende Werkzeuge gestaltet sind.

## Claims

1. Agricultural harvester for harvesting stalked and leaved agricultural crops, having a feeding and cutting means (3) which is positioned downstream of a pickup means (2) for picking up stalked and leafed crops and which comprises a feed passage (6) in which a feeding assembly (4), which is fitted with feeding tines (7) and which is driven in rotation, co-operates with a number of cutting blades (8, 9), for comminuting stalked crops, which are arranged at a spacing from one another transversely to the direction of travel and operation, and having a sharpening means (10, 10.1), associated with the feeding and cutting means (3), for sharpening the cutting blades (8, 9) in a region outside the feeding passage (6), with which sharpening means (10, 10.1) it is possible to accomplish the simultaneous sharpening of a blade group formed by at least two cutting blades (8, 9), and the sharpening bodies (14) of the sharpening means (10, 10.1) are held on a rotatably mounted drive shaft (15), capable of being driven, at a spacing which corresponds to the spacing between the cutting blades (8, 9).

2. Agricultural harvester according to claim 1, **characterised in that** the number of cutting blades (8, 9) which are combined into a blade group is a whole-number divisor of the total number of cutting blades (8, 9) which the feeding and cutting means (3) has.

3. Agricultural harvester according to claim 1, **characterised in that** the number of cutting blades (8, 9) which are combined into a blade group is approximately half the total number of cutting blades (8, 9) which the feeding and cutting means (3) has.

4. Agricultural harvester according to claim 1, **characterised in that** the blade group intended for sharpening comprises all the cutting blades (8, 9) on at least one cutting plane in the feeding and cutting means (3).

5. Agricultural harvester according to one of claims 1 to 4, **characterised in that** the cutting blades (8) are associated with the cutting and feeding means (3) in such a way as to be pivotable about an axis (13), and have at least one straight or arcuate cutting edge (12) which is adjacent the feeding assembly (4), which latter takes the form of a cutting and feeding rotor.

6. Agricultural harvester according to one of claims 1 to 4, **characterised in that** the cutting blades (9) are produced in the form of rotating cutting discs.

7. Agricultural harvester according to one of claims 1 to 4, **characterised in that** the cutting blades (9) take the form of cutting discs (24) which are driven in rotation.

8. Agricultural harvester according to one of claims 1 to 7, **characterised in that** the sharpening means (10, 10.1) comprises sharpening bodies (14), each cutting blade (8, 9) in a blade group intended for the sharpening process having a sharpening body (14) associated with it.

9. Agricultural harvester according to claim 5, **characterised in that** the drive shaft (15) carrying the sharpening bodies (14) can be transferred from an out-of-operation position in which it does not hamper the feeding and cutting work of the feeding and cutting means (3) to a sharpening position in which it co-operates with the cutting blades (8).

10. Agricultural harvester according to claim 9, **characterised in that** the sharpening means (10) comprises a drive means (18) which, in the sharpening position, causes the sharpening bodies (14) to be passed continuously along the cutting edges (12) of the cutting blades (8).

11. Agricultural harvester according to claim 10, **characterised in that** the drive means (18) for passing the sharpening bodies (14) continuously along the cutting edges (12) of the cutting blades (8) is produced in the form of an actuator (19) which exerts a tractive or compressive force.

12. Agricultural harvester according to claim 6 or 7, **characterised in that** the sharpening bodies (14) of the sharpening means (10.1) can be brought into engagement with the cutting blades (9) in the form of cutting discs (24) during the sharpening process.

13. Agricultural harvester according to one of claims 1 to 12, **characterised in that** the sharpening bodies (14) of the sharpening means (10, 10.1) are produced in the form of grinding discs which abrade material.

14. Agricultural harvester according to one of claims 1 to 12, **characterised in that** the sharpening bodies (14) of the sharpening means (10, 10.1) take the form of tools which displace material and shape the cutting edges (12) of the cutting blades (9).

## Revendications

1. Récolteuse agricole pour des produits agricoles à tiges et à feuilles, comportant un ramasseur (2) pour recueillir les produits à tiges et à feuilles en aval d'une installation de coupe et de transfert (3) comportant un canal de transfert (6) dans lequel une unité de transfert (4) garnie de dents de transfert (7), entraînée en continu, coopère avec un certain nombre de couteaux (8, 9) écartés les uns des autres, transversalement dans la direction de déplacement et de travail, pour réduire les produits à tiges, une installation d'affûtage (10, 10.1) associée à l'installation de coupe et de transfert (3) pour affûter les couteaux (8, 9) dans une zone à l'extérieur du canal de transfert (6), qui permet l'affûtage simultané d'un groupe de couteaux constitué par au moins deux couteaux (8, 9) et les organes d'affûtage (14) de l'installation d'affûtage (10, 10.1) sont tenus à une distance appropriée des couteaux (8, 9) sur un arbre d'entraînement (15) pouvant être entraîné et monté à rotation.

2. Récolteuse agricole selon la revendication 1, **caractérisée en ce que** le nombre de couteaux (8, 9) regroupé en un groupe de couteaux correspond à un diviseur entier du nombre total des couteaux (8, 9) de l'installation de coupe et de transfert (3).

3. Récolteuse selon la revendication 1, **caractérisée en ce que** le nombre de couteaux (8, 9) regroupés en un groupe correspond sensiblement à la moitié du nombre total de couteaux (8, 9) de l'installation de coupe et de transfert (3).

4. Récolteuse selon la revendication 1, **caractérisée en ce que** le groupe de couteaux parmi tous les couteaux (8, 9) prévus pour l'affûtage correspond au moins à un plan de coupe de l'installation de coupe et de transfert (3).

5. Récolteuse selon l'une des revendications 1 à 4, **caractérisée en ce que** les couteaux (8) sont montés pivotants autour de l'axe (13) de l'installation de coupe et de transfert (3) et il est prévu au moins une arête de coupe (12) droite ou courbe qui, en position de coupe, est tournée vers un équipement de transfert (4) en forme de rotor de coupe et de transfert.

6. Récolteuse selon l'une des revendications 1 à 4, **caractérisée en ce que** les couteaux (9) sont des disques de coupe, rotatifs.

7. Récolteuse selon l'une des revendications 1 à 4, **caractérisée en ce que** les couteaux (9) sont des disques de coupe (24) entraînés en rotation.

8. Récolteuse selon l'une des revendications 1 à 7, **caractérisée en ce que** l'installation d'affûtage (10, 10.1) se compose d'organes d'affûtage (14) et à chaque couteau (8, 9) d'un groupe de couteaux destiné à l'affûtage est associé chaque fois un organe d'affûtage (14).

9. Récolteuse selon la revendication 5, **caractérisée en ce que** l'arbre d'entraînement (15) qui porte les organes d'affûtage (14) peut être transféré d'une position hors service qui ne gêne pas le travail de coupe et de transfert de l'installation de coupe et de transfert (3) dans une position d'affûtage pour coopérer avec les couteaux (8).

10. Récolteuse selon la revendication 9, **caractérisée en ce que** l'installation d'affûtage (10) comprend une installation d'entraînement (18) assurant en position d'affûtage le guidage continu des organes d'affûtage (14) le long des arêtes de coupe (12) des couteaux (8).

11. Récolteuse selon la revendication 10, **caractérisée en ce que** l'installation d'entraînement (18) est réalisée de façon à guider en continu les organes d'affûtage (14) le long des arêtes de coupe (12) des couteaux (8) comme un organe d'actionnement (19) exerçant une force de traction ou de poussée.

12. Récolteuse selon la revendication 6 ou 7, **caractérisée en ce que** les organes d'affûtage (14) de l'installation d'affûtage (10.1) sont mis en prise au cours de l'opération d'affûtage avec les couteaux (9) en forme de disques de coupe (24).

13. Récolteuse selon l'une des revendications 1 à 12, **caractérisée en ce que** les organes d'affûtage (14) de l'installation d'affûtage (10, 10.1) sont des disques d'affûtage travaillant avec enlèvement de matière.

14. Récolteuse selon l'une des revendications 1 à 12, **caractérisée en ce que** les organes d'affûtage (14) de l'installation d'affûtage (10, 10.1) sont des outils travaillant avec refoulement de matière et formant les arêtes de coupe (12) des couteaux (8, 9).
